# EUROPEAN PATENT SPECIFICATION

(11) **EP 2 910 528 B1**
(45) Date of publication and mention of the grant of the patent: **03.07.2019**
(21) Application number: 13846343.5
(22) Date of filing: 15.10.2013
(51) Int. Cl.: C01G 53/00, H01M 4/525

(54) **Li-Ni COMPLEX OXIDE PARTICLE POWDER AND NON-AQUEOUS ELECTROLYTE SECONDARY BATTERY**
LI-NI-KOMPLEX-OXIDPARTIKELPULVER UND SEKUNDÄRBATTERIE MIT NICHTWÄSSRIGEM ELEKTROLYTEN
POUDRE À BASE DE PARTICULES D'OXYDE COMPLEXE DE Li-Ni ET BATTERIE SECONDAIRE À ÉLECTROLYTE NON AQUEUX

(30) Priority: 17.10.2012 JP 2012230145
(43) Date of publication of application: 26.08.2015
(73) Proprietor: TODA KOGYO CORP., Hiroshima 732-0828 (JP)
(72) Inventor: KIKUYA, Kazuhiko, Onoda-shi Yamaguchi 756-0847 (JP); ISHIZAKI, Kazutoshi, Kitakyushu-shi Fukuoka 808-0021 (JP); NISHIMURA, Masaki, Onoda-shi Yamaguchi 756-0847 (JP); MISHIMA, Yuji, Onoda-shi Yamaguchi 756-0847 (JP); SADAMURA, Hideaki, Onoda-shi Yamaguchi 756-0847 (JP)
(74) Representative: J A Kemp
(86) International application number: PCT/JP2013/077952
(87) International publication number: WO 2014/061654

(56) References cited:
- EP-A1- 2 416 411
- EP-A1- 2 544 272
- EP-A1- 2 911 224
- WO-A1-2010/113583
- WO-A1-2011/108595
- JP-A- 2009 515 799
- JP-A- 2010 064 944

## Description

### TECHNICAL FIELD

The present invention relates to Li-Ni composite oxide particles that exhibit a high initial discharge capacity and are excellent in first-cycle charge/discharge efficiency when used as a positive electrode (cathode) active substance for non-aqueous electrolyte secondary batteries.

### BACKGROUND ART

With the recent rapid development of portable and cordless electronic devices such as audio-visual (AV) devices and personal computers, there is an increasing demand for secondary batteries having a small size, a light weight and a high energy density as a power source for driving these electronic devices. Also, in consideration of global environments, electric vehicles and hybrid vehicles have been recently developed and put into practice, so that there is an increasing demand for lithium ion secondary batteries for large size applications having excellent storage characteristics. Under these circumstances, the lithium ion secondary batteries having advantages such as a large charge/discharge capacity and good storage characteristics have been noticed.

Hitherto, as positive electrode active substances useful for high energy-type lithium ion secondary batteries having a 4 V-grade voltage, there are generally known LiMn₂O₄ having a spinel structure, LiMnO₂ having a zigzag layer structure, LiCoO₂ and LiNiO₂ having a layer rock-salt structure, or the like. Among the secondary batteries using these active substances, lithium ion secondary batteries using LiNiO₂ have been noticed because of a large charge/discharge capacity thereof. However, the materials tend to be deteriorated in first-cycle charge/discharge efficiency (= discharge capacity/charge capacity) and charge/discharge cycle durability, and, therefore, it has been required to further improve properties thereof.

Specifically, when lithium is extracted from LiNiO₂, the crystal structure of LiNiO₂ suffers from Jahn-Teller distortion since Ni³⁺ is converted into Ni⁴⁺. When the amount of Li extraction reaches 0.45, the crystal structure of such a lithium extraction region of LiNiO₂ is transformed from hexagonal system into monoclinic system, and a further extraction of lithium therefrom causes transformation of the crystal structure from monoclinic system into hexagonal system. Therefore, when the charge/discharge reaction is repeated, the crystal structure of LiNiO₂ tends to become unstable, so that the resulting secondary batteries tend to be deteriorated in cycle characteristics or suffer from occurrence of undesired reaction between LiNiO₂ and an electrolyte solution owing to release of oxygen therefrom, resulting in deterioration in first-cycle charge/discharge efficiency and storage characteristics of the battery. To solve these problems, studies have been made on those materials produced by adding Co, Al, Mn and the like to LiNiO₂ to substitute a part of Ni in the LiNiO₂ therewith. However, the materials have still failed to solve the aforementioned problems. Therefore, it has still been required to provide an Li-Ni composite oxide having a more stabilized crystal structure.

In addition, the Li-Ni composite oxide particles are constituted of primary particles having a small particle diameter. Therefore, in order to obtain an Li-Ni composite oxide having a high packing density, it is necessary to suitably control properties of the Li-Ni composite oxide such that the primary particles are densely aggregated together to form secondary particles thereof. However, the thus formed secondary particles of the Li-Ni composite oxide tend to be broken by compression upon production of an electrode therefrom, so that the Li-Ni composite oxide tends to suffer from increase in surface area and accelerated reaction with an electrolyte solution upon storage in high-temperature charged conditions to form an insulator film along a boundary surface of the electrode and thereby raise a resistance of the resulting secondary battery. Also, the Li-Ni composite oxide tends to have such a drawback that since the Li-Ni composite oxide has a low first-cycle charge/discharge efficiency as compared to Li-Co composite oxide, when using the Li-Ni composite oxide as a positive electrode material for lithium ion batteries, it is necessary to use an excessive amount of a negative electrode material to compensate an irreversible capacity caused in the first charge/discharge cycle, so that the lithium ion battery tends to be deteriorated in energy density per the battery.

That is, there is an increasing demand for Li-Ni composite oxide that can exhibit a high discharge capacity as a positive electrode active substance for non-aqueous electrolyte secondary batteries and is excellent in first-cycle charge/discharge efficiency.

Hitherto, in order to increase a capacity, control a crystallite size, stabilize a crystal structure and improve various properties such as a first-cycle charge/discharge efficiency, various improvements in LiNiO₂ particles have been attempted. For example, there are known the technology in which a composition of an Li-Ni composite oxide from which Li is extracted by charging is controlled such that the content of tetravalent Ni therein is not more than 60% to attain a high initial discharge capacity and improve an initial thermal stability thereof (Patent Literature 1); the technology in which a part of Ni in an Li-Ni composite oxide is substituted with at least one element selected from the group consisting of metal species including Co, Al and Mn, and after calcining the Li-Ni composite oxide, an excessive amount of Li is removed therefrom to attain a high initial discharge capacity and improve cycle characteristics, a thermal stability and storage characteristics thereof (Patent Literature 2); the technology in which an oxide of at least one element selected from the group consisting of B and P is incorporated into an Li-Ni composite oxide to control a crystalline size of the composite oxide, maintain a high discharge capacity thereof, and improve a thermal stability thereof (Patent Literature 3); the technology in which a part of Ni in an Li-Ni composite oxide is substituted with Co and Al to stabilize a crystal structure thereof (Patent Literature 4); and the like.

Patent Literature 5 relates to a positive electrode active material for a lithium ion battery with a layered structure represented by LiₓNi_{y}M_{i-y}O_{z} wherein M represents at least one element selected from a group consisting of Mn, Co, Mg, Al, Ti, Cr, Fe, Cu and Zr, x is in the range from 0.9 to 1.2; y is in the range from 0.3 to 0.95; and z is in the range from 1.8 to 2.4, wherein, when a value obtained by dividing an average of peak intensities observed between 1420 and 1450 cm⁻¹ and between 1470 and 1500 cm⁻¹ by the maximum intensity of a peak appearing between 520 and 620 cm⁻¹ in an infrared absorption spectrum obtained by FT-IR is represented by A, A satisfies the following relational formula: 0.20y-0.05≤A≤0.53y-0.06.

Patent Literature 6 relates to a positive electrode active material for a lithium ion battery which has a layer structure and is represented by the compositional formula: Liₓ(Ni_{y}M_{i-y})O_{z} (wherein M represents at least one type selected from the group consisting of Mn, Co, Al, Mg, Cr, Ti, Fe, Nb, Cu and Zr, x denotes a number from 0.9 to 1.2; y denotes a number from 0.70 to 0.79; and z denotes a number of 1.9 or more, wherein the coordinates of the lattice constant a and compositional ratio (Li/M) are within the region enclosed by three lines given by the equations: y = 1.108, y = -37.298x + 108.27, and y = 75.833x - 217.1 on a graph in which the x-axis represents a lattice constant a and the y-axis represents a compositional ratio (Li/M) of Li to M, and the lattice constant c is 14.2 to 14.25.

### CITATION LIST:

### PATENT LITERATURE

Patent Literature 1: Japanese Patent Application Laid-open (KOKAI) No. 2006-107845
Patent Literature 2: Japanese Patent Application Laid-open (KOKAI) No. 2010-64944
Patent Literature 3: Japanese Patent Application Laid-open (KOKAI) No. 2001-76724
Patent Literature 4: Japanese Patent Application Laid-open (KOKAI) No. 2008-218122
Patent Literature 5: WO 2010/113583
Patent Literature 6: WO 2011/108595

### SUMMARY OF INVENTION

### TECHNICAL PROBLEM

At present, it has been strongly required to provide an Li-Ni composite oxide having a high discharge capacity and an excellent first-cycle charge/discharge efficiency as a positive electrode active substance for non-aqueous electrolyte secondary batteries. However, the Li-Ni composite oxide that is capable of fully satisfying the above requirements has not been obtained until now.

That is, Patent Literature 1 describes the technology in which the composition of the original Li-Ni composite oxide is controlled such that a content of tetravalent Ni in the Li-Ni composite oxide from which 75% of Li is extracted by charging is not more than 60%, to thereby attain a high initial discharge capacity and improve a thermal stability thereof. However, in Patent Literature 1, a large amount of Ni must be substituted with Co and Mn to control the tetravalent Ni content in the Li-Ni composite oxide to not more than 60%, and it is therefore required to increase a charging voltage in order to achieve a high capacity of the Li-Ni composite oxide, so that the thermal stability is sacrificed therefor. Thus, it may be difficult to achieve both of a high capacity and a good thermal stability merely by controlling the composition of the Li-Ni composite oxide, and therefore the technology described in Patent Literature 1 may fail to provide a sufficient method of obtaining the Li-Ni composite oxide having an improved first-cycle charge/discharge efficiency.

Also, Patent Literature 2 describes the technology in which a part of Ni in the Li-Ni composite oxide is substituted with at least one element selected from the group consisting of metal species including Co, Al and Mn, and after calcining the Li-Ni composite oxide, an excessive amount of Li is removed therefrom to attain a high initial discharge capacity and improve cycle characteristics, a thermal stability and storage characteristics thereof. However, the treatment for removal of Li tends to cause deterioration in capacity, and the technology described in Patent Literature 2 therefore may fail to to provide a sufficient method of obtaining the Li-Ni composite oxide having a high discharge capacity and a high first-cycle charge/discharge efficiency.

Further, Patent Literature 3 describes the technology in which an oxide of at least one element selected from the group consisting of B and P is incorporated into the Li-Ni composite oxide to maintain a high discharge capacity thereof and improve a thermal stability thereof. However, the addition of the element such as B and P which does not contribute to charge/discharge reactions tends to cause variation of a crystal structure of the Li-Ni composite oxide and deterioration in capacity thereof, and therefore the technology described in Patent Literature 3 may fail to to provide a sufficient method of obtaining the Li-Ni composite oxide having a high discharge capacity and a high first-cycle charge/discharge efficiency.

Furthermore, Patent Literature 4 describes the technology in which a part of Ni in the Li-Ni composite oxide is substituted with Co and Al to stabilize a crystal structure thereof, and it is therefore possible to attain a high capacity and a high output of the resulting battery. The technology described in Patent Literature 4 aims at enhancing a capacity and output characteristics of the battery by controlling an Li occupancy of Li sites and a metal occupancy of metal sites in crystals of the Li-Ni composite oxide as determined by Rietveld analysis to not less than 98.5%, and not less than 95% and not more than 98%, respectively, and therefore is not concerned with improvement in first-cycle charge/discharge efficiency of the Li-Ni composite oxide.

In consequence, an object of the present invention is to obtain Li-Ni composite oxide particles having a high discharge capacity and an excellent first-cycle charge/discharge efficiency when used as a positive electrode active substance for non-aqueous electrolyte secondary batteries.

### SOLUTION TO PROBLEM

The above object can be achieved by the following aspects of the present invention.

That is, according to the present invention, there are provided Li-Ni composite oxide particles having a composition of Liₓ(Ni_{y}CO_{2(1-y)/5}Mn_{3(1-y)/5})_{1-z}M_{z}O₂ wherein x, y and z represent 1.00 ≤ x ≤ 1.10; 0.65 < y < 0.82; and 0 ≤ z < 0.05, respectively; and M is at least one element selected from the group consisting of Al, Zr and Mg,
wherein a metal occupancy (%) of lithium sites of the Li-Ni composite oxide as determined by Rietveld analysis of X-ray diffraction thereof is not less than 2% and not more than 7% and a product of the metal occupancy (%) and a crystallite size (nm) of the Li-Ni composite oxide as determined by the Rietveld analysis is not less than 700 and not more than 1400.

Also, according to the present invention, there are provided the Li-Ni composite oxide particles according to the invention, wherein the crystallite size of the Li-Ni composite oxide as determined by the Rietveld analysis is not more than 500 nm.

Also, according to the present invention, there are provided the Li-Ni composite oxide particles according to the invention, wherein the Li-Ni composite oxide particles have an average particle diameter of 1 to 20 µm and/or a BET specific surface area of 0.1 to 1.6 m²/g.

Also provided is a process for producing the Li-Ni composite oxide particles of the invention, which process comprises mixing lithium compound particles and Ni-Co-Mn hydroxide particles, together with aluminum compound particles and/or zirconium compound particles if required, and calcining the resulting mixture.

Preferably the lithium compound is lithium hydroxide.

More preferably, the lithium compound has a lithium carbonate content of less than 5%.

It is further preferred that the lithium compound particles have an average particle diameter of not more than 50 µm.

It is additionally preferred that the Ni-Co-Mn hydroxide particles have an average particle diameter of 2 to 30 µm and BET specific surface area of 1 to 20 m²/g.

It is also preferred that the calcination takes place at a temperature of 650 to 950°C in an oxidative gas atmosphere.

In addition, according to the present invention, thereis provided a non-aqueous electrolyte secondary battery using a positive electrode comprising a positive electrode active substance comprising the Li-Ni composite oxide particles of the invention.

Further provided is the use of the Li-Ni composite oxide particles of the invention as a positive electrode active substance for a non-aqueous electrolyte battery.

### ADVANTAGEOUS EFFECTS OF INVENTION

In the Li-Ni composite oxide particles according to the present invention, by controlling a ratio of molar concentrations of Co and Mn components included in the Li-Ni composite oxide particles to 2:3, it is possible to ensure a diffusion path of lithium and attain a high charge/discharge capacity, and minimize a change in crystal structure of the Li-Ni composite oxide particles owing to insertion and desorption of lithium ions upon charging and discharging, so that the Li-Ni composite oxide particles can be improved in first-cycle charge/discharge efficiency.

In the Li-Ni composite oxide particles according to the present invention, by controlling an occupancy of metals included in lithium sites thereof to not less than 2% and not more than 7%, it is possible to ensure a diffusion path of lithium and attain a high charge/discharge capacity, so that the Li-Ni composite oxide particles can be stabilized in their crystal structure and can be improved in first-cycle charge/discharge efficiency.

In addition, the Li-Ni composite oxide particles according to the present invention have a well-controlled crystallite size and a small specific surface area, and therefore can exhibit a good first-cycle charge/discharge efficiency since the reaction of the Li-Ni composite oxide particles with an electrolyte solution is suppressed.

Therefore, the Li-Ni composite oxide particles according to the present invention are capable of satisfying both of a high capacity and an improved first-cycle charge/discharge efficiency at the same time, and can be suitably used as a positive electrode active substance for non-aqueous electrolyte secondary batteries.

### BRIEF DESCRIPTION OF THE DRAWINGS

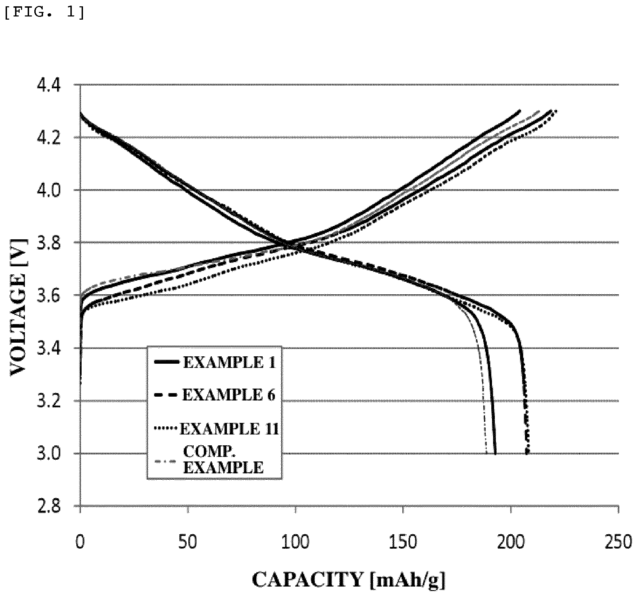

FIG. 1 is a charge/discharge characteristic curve of a non-aqueous electrolyte secondary battery using Li-Ni composite oxide particles obtained in respective Examples and Comparative Example in the present invention as a positive electrode active substance.

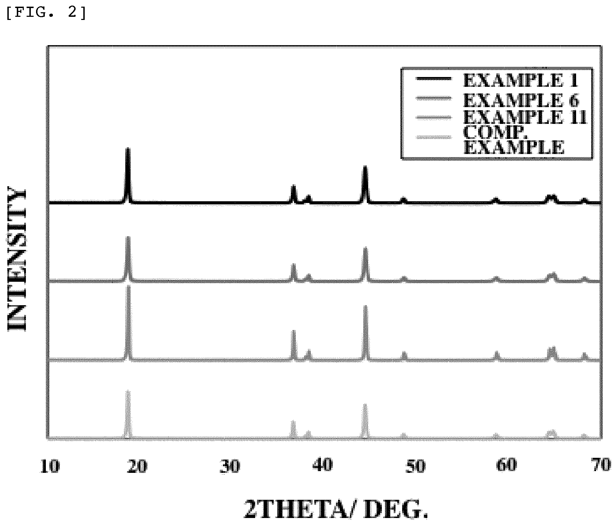

FIG. 2 is an X-ray diffraction pattern of Li-Ni composite oxide particles obtained in respective Examples and Comparative Example in the present invention.

### DESCRIPTION OF EMBODIMENTS

The construction of the present invention is described in more detail below.

First, the Li-Ni composite oxide particles for non-aqueous electrolyte secondary batteries according to the present invention are described.

The Li-Ni composite oxide particles according to the present invention have a composition of Liₓ(Ni_{y}CO_{2(1-y)/5}Mn_{3(1-y)/5})_{1-z}M_{z}O₂ wherein x, y and z represent 1.00 ≤ x ≤ 1.10; 0.65 < y < 0.82; and 0 ≤ z < 0.05, respectively; and M is at least one element selected from the group consisting of Al, Zr and Mg.

When x is less than 1.00, it is not possible to obtain the Li-Ni composite oxide having a high battery capacity. On the other hand, when x is more than 1.10, Li tends to be often included in metal sites in the Li-Ni composite oxide. Thus, x is preferably 1.00 ≤ x ≤ 1.05, and more preferably 1.01 ≤ x ≤ 1.04.

When y is not more than 0.65, the molar concentrations of the Co and Mn components in the Li-Ni composite oxide tend to be increased, so that the obtained Li-Ni composite oxide tends to be deteriorated in discharge capacity. As a result, it is not possible to attain a high discharge capacity as one of features of the Li-Ni composite oxide. When y is not less than 0.82, it is possible to attain a high discharge capacity of the Li-Ni composite oxide. However, it is not possible to suppress occurrence of such a Jahn-Teller distortion that Ni³⁺ is converted into Ni⁴⁺ owing to a change in crystal structure of the Li-Ni composite oxide during the charging and discharging process, so that the Li-Ni composite oxide tends to be deteriorated in charge/discharge efficiency in initial charging and discharging cycles of the resulting battery, and tends to suffer from accelerated deterioration in discharge capacity during repeated charging and discharging cycles. Thus, y is preferably 0.68 ≤ y ≤ 0.81, and more preferably 0.70 ≤ y ≤ 0.80.

The ratio of the molar concentrations of the Co and Mn components in the Li-Ni composite oxide particles according to the present invention is 2:3. Even when the ratio of the molar concentrations of the Co and Mn components in the Li-Ni composite oxide particles is more than 2/3, it is possible to attain a high discharge capacity of the Li-Ni composite oxide particles. However, the resulting Li-Ni composite oxide particles tend to be slightly deteriorated in first-cycle charge/discharge efficiency, and the amount of the Co component used as a scarce metal tends to be increased, so that industrial disadvantages such as an increased amount of exhaustible resources used and increased costs for the positive electrode materials tend to be caused. On the other hand, when the ratio of the molar concentrations of the Co and Mn components in the Li-Ni composite oxide particles is less than 2/3, the Li-Ni composite oxide particles tend to suffer from deterioration in first-cycle charge/discharge efficiency and accelerated deterioration in discharge capacity during the repeated charging and discharging cycles. Meanwhile, the ratio of the molar concentrations of the Co and Mn components is 2/3 in view of a compositional formula thereof. However, even though the ratio of the molar concentrations of the Co and Mn components may be slightly larger than or slightly smaller than 2/3, it is considered that the ratio of the molar concentrations of the Co and Mn components lies within the scope of the present invention as long as the effects of the present invention can be achieved.

When z is more than 0.05, since a true density of the positive electrode active substance tends to be lowered, it may be difficult to obtain a material having a high packing property, and the Li-Ni composite oxide tends to be considerably deteriorated in charge/discharge capacity, so that such a merit that the Li-Ni composite oxide has a high charge/discharge capacity tends to be reduced. Thus, z is preferably 0.01 ≤ z ≤ 0.04, and more preferably 0.01 ≤ a ≤ 0.02.

The Li-Ni composite oxide according to the present invention has a crystal structure belonging to a space group R-3m in which lithium sites (3a sites) occupied mainly by lithium, metal sites (3b sites) occupied mainly by Ni, Co and M, and oxygen sites (6c sites) occupied mainly by oxygen are present. Meanwhile, the numerical character "3" of the above space group R-3m is correctly indicated with a "macron" as "3̅", but the symbol of the space group is conveniently expressed herein merely by "R-3m".

The crystal structure of the Li-Ni composite oxide according to the present invention is determined by Rietveld analysis. As a function of a peak shape of X-ray diffraction for the Li-Ni composite oxide particles, there is used a modified TCH pseudo-Voigt function obtained by superposition of a Gauss function and a Lorentz function.

The crystallite size of the Li-Ni composite oxide particles is calculated from a coefficient of (cosθ)⁻¹ of a half band width of the Lorentz function according to Scherrer's formula, wherein the Gauss function is substantially regarded as a device-dependent function, and θ is a diffraction angle.

The occupancy of the respective sites may also be calculated by the same analysis as described above. The occupancy of metals in lithium sites (metal occupancy of lithium sites) as used herein means a proportion of Ni, Co and M atoms occupying lithium sites in the Li-Ni composite oxide.

The product of the metal occupancy (%) of lithium sites of the Li-Ni composite oxide particles according to the present invention as determined by Rietveld analysis of X-ray diffraction thereof and the crystallite size (nm) of the Li-Ni composite oxide particles as determined by the Rietveld analysis is not less than 700 and not more than 1400. In the present invention, by controlling both of the metal occupancy of lithium sites and the crystallite size, it is possible to attain a high capacity and an improved first-cycle charge/discharge efficiency of the Li-Ni composite oxide particles. It is considered that the product of the metal occupancy (%) of lithium sites and the crystallite size (nm) as determined by the Rietveld analysis has a certain relationship with a durability of the Li-Ni composite oxide particles during process of delithiation of crystals thereof. The metal occupancy of lithium sites represents completeness of the R-3m structure of the Li-Ni composite oxide particles, whereas the crystallite size means a size of the R-3m structure. Therefore, by controlling both of the metal occupancy of lithium sites and the crystallite size at the same time, it is possible to control electrochemical properties of the Li-Ni composite oxide particles. When the product of the metal occupancy of lithium sites and the crystallite size is less than 700, the reactivity of the Li-Ni composite oxide particles with an electrolyte solution tends to be accelerated, so that the Li-Ni composite oxide particles tend to be undesirably deteriorated in first-cycle charge/discharge efficiency. When the product of the metal occupancy of lithium sites and the crystallite size is more than 1400, the resistance to diffusion of lithium ions tends to be increased, so that the Li-Ni composite oxide particles tend to be deteriorated in initial discharge capacity. The product of the metal occupancy of lithium sites and the crystallite size of the Li-Ni composite oxide particles is more preferably not less than 900 and not more than 1300, and still more preferably not less than 1000 and not more than 1200.

The metal occupancy of lithium sites of the Li-Ni composite oxide particles according to the present invention as determined by Rietveld analysis of X-ray diffraction thereof is not less than 2% and not more than 7%. When the metal occupancy of lithium sites is more than 7%, it is not possible to attain a sufficient charge/discharge capacity of the Li-Ni composite oxide particles. The metal occupancy of lithium sites of the Li-Ni composite oxide particles is more preferably not less than 2% and not more than 6%. In order to attain a large charge/discharge capacity, the metal occupancy of lithium sites of the Li-Ni composite oxide particles is preferably as small as possible. However, since the lithium sites are likely to be substituted with the other different kinds of elements such as Co, it may be difficult to approach the metal occupancy of lithium sites to zero (0%). In addition, in the present invention, even when the metal occupancy of lithium sites is not less than 2%, it is possible to attain a sufficient charge/discharge capacity of the Li-Ni composite oxide particles.

The crystallite size of the Li-Ni composite oxide particles according to the present invention as determined by Rietveld analysis of X-ray diffraction thereof is preferably not more than 500 nm. When the crystallite size of the Li-Ni composite oxide particles is more than 500 nm, the resistance to diffusion of lithium ions tends to be increased, so that the Li-Ni composite oxide particles tend to be deteriorated in initial discharge capacity. The crystallite size of the Li-Ni composite oxide particles is preferably not less than 100 nm and not more than 450 nm, and more preferably not less than 200 nm and not more than 400 nm.

The BET specific surface area of the Li-Ni composite oxide particles according to the present invention is preferably 0.1 to 1.6 m²/g. It may be difficult to industrially produce the Li-Ni composite oxide particles having a BET specific surface area of less than 0.1 m²/g. When the BET specific surface area of the Li-Ni composite oxide particles is more than 1.6 m²/g, the Li-Ni composite oxide particles tend to be deteriorated in packing density and undesirably enhanced in reactivity with an electrolyte solution. The BET specific surface area of the Li-Ni composite oxide particles is more preferably 0.1 to 1.0 m²/g, and still more preferably 0.15 to 0.6 m²/g.

The average particle diameter of the Li-Ni composite oxide particles according to the present invention is preferably 1 to 20 *µ*m. When the average particle diameter of the Li-Ni composite oxide particles is less than 1 *µ*m, the Li-Ni composite oxide particles tend to be deteriorated in packing density and undesirably enhanced in reactivity with an electrolyte solution. It may be difficult to industrially produce the Li-Ni composite oxide particles having an average particle diameter of more than 20 *µ*m. The average particle diameter of the Li-Ni composite oxide particles is more preferably 3 to 17 *µ*m.

The particle shape of the Li-Ni composite oxide particles according to the present invention is a spherical shape, and preferably has less acute angle portions.

Next, the process for producing the Li-Ni composite oxide particles according to the present invention is described.

The Li-Ni composite oxide particles according to the present invention may be produced by mixing lithium compound particles and Ni-Co-Mn hydroxide particles, and calcining the resulting mixture.

In addition, the Li-Ni composite oxide particles according to the present invention may also be produced by mixing lithium compound particles and Ni-Co-Mn hydroxide particles, if required, together with aluminum compound particles and/or zirconium compound particles, and calcining the resulting mixture.

The lithium compound used in the present invention is preferably lithium hydroxide, and more preferably a lithium compound having a lithium carbonate content of less than 5%. When the lithium carbonate content in the lithium compound is not less than 5%, lithium carbonate tends to remain in the produced Li-Ni composite oxide as an impurity, so that the Li-Ni composite oxide particles tend to be deteriorated in initial charge/discharge capacity, and tend to cause deterioration in first-cycle charge/discharge efficiency owing to decomposition of the lithium carbonate upon charging.

In addition, the average particle diameter of the lithium compound particles used is preferably not more than 50 *µ*m, and more preferably not more than 30 *µ*m. When the average particle diameter of the lithium compound particles used is more than 50 *µ*m, the lithium compound particles tend to be hardly mixed uniformly with the Ni-Co-Mn hydroxide particles, and the aluminum compound particles and/or zirconium compound particles, so that it may be difficult to obtain the Li-Ni composite oxide having a good crystallinity.

The Ni-Co-Mn hydroxide as used in the present invention is intended to include Ni-Co-Mn-Mg hydroxide.

The Ni-Co-Mn hydroxide particles used in the present invention have an average particle diameter of 2 to 30 *µ*m and a BET specific surface area of 1 to 20 m²/g.

The Ni-Co-Mn hydroxide particles used in the present invention may be prepared by the following method. That is, an aqueous solution prepared by mixing 0.1 to 2 mol/L aqueous solutions each comprising a sulfuric acid salt of a metal element such as nickel sulfate, cobalt sulfate and manganese sulfate, and if required, magnesium sulfate and the like, such that a molar ratio of the metal element in the resulting solution is adjusted to a predetermined range, is mixed with an ammonia aqueous solution and a sodium hydroxide aqueous solution while continuously feeding 1.0 to 15.0 mol/L of the ammonia aqueous solution and 0.1 to 2.0 mol/L of the sodium hydroxide aqueous solution to a reaction vessel such that the ammonia concentration in the reaction vessel is controlled to not more than 1.4 mol/L and the ratio of the ammonia concentration in the reaction vessel to a surplus hydroxyl group concentration in the reaction vessel is controlled to not less than 6. The suspension of the Ni-Co-Mn hydroxide thus produced is overflowed from the reaction vessel through an overflow pipe, and fed in a concentration vessel connected to the overflow pipe to concentrate the Ni-Co-Mn hydroxide. While suitably controlling a rate of the concentration, the thus concentrated Ni-Co-Mn hydroxide is then circulated to the reaction vessel, and the reaction is continuously carried out until the concentration of the Ni-Co-Mn hydroxide in the reaction vessel and the precipitation vessel reaches 2 to 10 mol/L to control a particle size of the Ni-Co-Mn hydroxide particles by mechanical collision therebetween.

The ammonia concentration in the reaction vessel is preferably not more than 1.4 mol/L. When the ammonia concentration in the reaction vessel is more than 1.4 mol/L, primary particles of the Ni-Co-Mn hydroxide tend to become excessively large, so that the Ni-Co-Mn hydroxide particles tend to be deteriorated in reactivity with the lithium compound upon the calcination, so that it may be difficult to control a crystallite size of the resulting Li-Ni composite oxide particles upon the calcination.

The Ni-Co-Mn hydroxide is produced on the basis of the following formula (1).

Me²⁺SO₄ + 2NaOH → Me²⁺(OH)₂ + Na₂SO₄ (1)

In the above formula, when the molar ratio of (Me²⁺SO₄) to (NaOH) is 1:2, theoretical ratios of the raw materials can be attained. However, in the reaction of the process according to the present invention, NaOH is fed in an excessive amount as compared to its theoretical molar ratio, and by suitably controlling the surplus hydroxyl group concentration, it is possible to obtain the aimed Ni-Co-Mn hydroxide.

The surplus hydroxyl group concentration in the reaction vessel is preferably not less than 0.005 mol/L and not more than 0.04 mol/L. When the surplus hydroxyl group concentration in the reaction vessel is less than 0.005 mol/L, the density inside of secondary particles of the Ni-Co-Mn hydroxide tends to be lowered, so that the bulk density of the Ni-Co-Mn hydroxide tends to be reduced. When the surplus hydroxyl group concentration in the reaction vessel is more than 0.04 mol/L, the primary particle size of the Ni-Co-Mn hydroxide tends to be increased, so that the Ni-Co-Mn hydroxide tends to be deteriorated in reactivity with the Li compound upon the calcination.

The ratio of the ammonia concentration in the reaction vessel to the surplus hydroxyl group concentration in the reaction vessel (ammonia concentration in reaction vessel/surplus hydroxyl group concentration in reaction vessel) is preferably not less than 6. When the ratio of (ammonia concentration in reaction vessel/surplus hydroxyl group concentration in reaction vessel) is less than 6, the primary particle size of the Ni-Co-Mn hydroxide tends to be increased, so that the Ni-Co-Mn hydroxide tends to be deteriorated in reactivity with the Li compound upon the calcination, so that it may be difficult to control a crystallite size of the resulting Li-Ni composite oxide particles upon the calcination.

Further, the Ni-Co-Mn hydroxide particles may be obtained by washing a slurry of the Ni-Co-Mn hydroxide with water in an amount 1 to 10 times a weight of the slurry of the Ni-Co-Mn hydroxide using a filter press, a vacuum filter, a filter thickener or the like to remove co-existing soluble salts produced upon the reaction therefrom, and then drying the thus washed product.

The aluminum compound used in the present invention is preferably a hydroxide of aluminum.

The average particle diameter of the aluminum compound particles is preferably not more than 5 *µ*m, and more preferably not more than 2 *µ*m. The primary particle diameter of the aluminum compound particles is preferably not more than 1 *µ*m.

The amount of the aluminum compound added is controlled such that the molar ratio of the aluminum compound in terms of the element based on the Ni-Co-Mn hydroxide is preferably 2 to 5%. When the amount of the aluminum compound added is less than 2%, the resulting Li-Ni composite oxide particles tend to suffer from increased deterioration in capacity owing to the charging and discharging cycles. When the amount of the aluminum compound added is more than 5%, the resulting Li-Ni composite oxide particles tend to be deteriorated in discharge capacity.

The zirconium compound used in the present invention is preferably an oxide of zirconium.

The average particle diameter of the zirconium compound particles is preferably not more than 5 *µ*m, and more preferably not more than 2 *µ*m.

The amount of the zirconium compound added is controlled such that the molar ratio of the zirconium compound in terms of the element based on the Ni-Co-Mn hydroxide is preferably not more than 2%. When the amount of the zirconium compound added is more than 2%, the resulting Li-Ni composite oxide particles tend to be deteriorated in discharge capacity.

The treatment of mixing the lithium compound particles, the Ni-Co-Mn hydroxide particles, and the aluminum compound particles and/or the zirconium compound particles may be conducted by either a dry method or a wet method, as long as these particles can be uniformly mixed with each other.

The mixing ratio between the lithium compound particles, the Ni-Co-Mn hydroxide particles, and the aluminum compound particles and/or the zirconium compound particles is controlled such that the molar ratio of Li(Ni + Co + Mn + Al + Zr) is preferably 1.00 to 1.10.

The calcination temperature is preferably 650 to 950°C. When the calcination temperature is lower than 650°C, the reaction between Li and Ni tends to hardly proceed to a sufficient extent, so that growth of primary particles of the Li-Ni composite oxide particles tends to become insufficient. When the calcination temperature is higher than 950°C, Ni³⁺ tends to be reduced into Ni²⁺ and included in the Li site, so that the metal occupancy of lithium sites in the Li-Ni composite oxide particles tends to be increased. The atmosphere upon the calcination is preferably an oxidative gas atmosphere, and more preferably an atmosphere having an oxygen concentration of not less than 70%. The calcination time is preferably 5 to 30 hr.

Next, the non-aqueous electrolyte secondary battery using a positive electrode comprising the positive electrode active substance comprising the Li-Ni composite oxide particles according to the present invention is described.

The non-aqueous electrolyte secondary battery using a positive electrode comprising the positive electrode active substance comprising the Li-Ni composite oxide particles according to the present invention comprises the above positive electrode, a negative electrode and an electrolyte.

When producing the positive electrode comprising the positive electrode active substance comprising the Li-Ni composite oxide particles according to the present invention, a positive electrode mixture prepared by adding and mixing a conducting agent and a binder into the positive electrode active substance is applied onto a current collector by an ordinary method. Examples of the preferred conducting agent include acetylene black, carbon black and graphite. Examples of the preferred binder include polytetrafluoroethylene and polyvinylidene fluoride.

As the negative electrode, there may be used an electrode comprising a negative electrode active substance such as metallic lithium, lithium/aluminum alloys, lithium/tin alloys, graphite or black lead, or the like.

As the electrolyte, there may be used a solution prepared by dissolving lithium phosphate hexafluoride as well as at least one lithium salt selected from the group consisting of lithium perchlorate, lithium borate tetrafluoride and the like in a solvent.

Also, as a solvent for the electrolyte, there may be used combination of ethylene carbonate and diethyl carbonate, as well as an organic solvent comprising at least one compound selected from the group consisting of carbonates such as propylene carbonate and dimethyl carbonate, and ethers such as dimethoxyethane.

The non-aqueous electrolyte secondary battery produced using the positive electrode active substance comprising the Li-Ni composite oxide particles according to the present invention has an initial discharge capacity of about 190 to about 210 mAh/g, and a first-cycle charge/discharge efficiency of more than 90% as measured at a charge/discharge current density of 0.1C.

### <Function>

In the Li-Ni composite oxide particles according to the present invention, by controlling a ratio of molar concentrations of Co and Mn components included in the Li-Ni composite oxide to 2:3, it is possible to ensure a diffusion path of lithium and attain a high charge/discharge capacity, and minimize a change in crystal structure of the Li-Ni composite oxide particles owing to insertion and desorption of lithium ions upon charging and discharging, so that the Li-Ni composite oxide particles can be improved in first-cycle charge/discharge efficiency.

In particular, in the present invention, by incorporating a large amount of an Ni component into the Li-Ni composite oxide particles and controlling a ratio of molar concentrations of Co and Mn components therein to 2:3, it is possible to maintain a high charge/discharge capacity and attain a high first-cycle charge/discharge efficiency, and further minimize a change in crystal structure of the Li-Ni composite oxide particles owing to insertion and desorption of lithium ions upon charging and discharging.

In addition, in the present invention, by controlling a product of the metal occupancy (%) of lithium sites of the Li-Ni composite oxide particles as determined by Rietveld analysis of X-ray diffraction thereof and the crystallite size (nm) of the Li-Ni composite oxide particles as determined by the Rietveld analysis to not less than 700 and not more than 1400, it is possible to maintain a high charge/discharge capacity and attain a high first-cycle charge/discharge efficiency.

In particular, by controlling the occupancy of metals included in lithium sites of the Li-Ni composite oxide particles to not less than 2% and not more than 7%, it is possible to ensure a diffusion path of lithium and attain a high charge/discharge capacity of the resulting battery, and since the crystal structure thereof is stabilized, it is possible to improve a first-cycle charge/discharge efficiency of the resulting battery.

In addition, the Li-Ni composite oxide particles according to the present invention have a large crystallite size and a small specific surface area, and therefore the reaction of the Li-Ni composite oxide particles with an electrolyte solution can be suppressed, so that it is possible to improve a first-cycle charge/discharge efficiency of the resulting battery.

### EXAMPLES

Typical examples of the present invention are described below.

The ammonia concentration in the reaction vessel upon preparing the Ni-Co-Mn hydroxide used in the present invention was determined as follows. That is, a predetermined amount of a supernatant solution of a reaction slurry comprising the hydroxide was sampled. The thus sampled supernatant solution was subjected to distillative extraction treatment to extract an ammonia component therefrom. The obtained extract solution was subjected to titration with a 0.5 N hydrochloric acid solution to determine an ammonia concentration therein. The time at which a pH of the reaction solution became 5.2 was regarded as a terminal point of the titration to measure a titer used, and the ammonia concentration therein was determined from the titer. Also, the surplus hydroxyl group concentration in the reaction vessel was determined as follows. That is, a predetermined amount of a supernatant solution of the reaction slurry comprising the hydroxide was sampled. The thus sampled supernatant solution was directly subjected to titration with a 0.5 N hydrochloric acid solution, and at the time at which a pH of the reaction solution became 5.2 was regarded as a terminal point of the titration to measure a titer used. A sum of the ammonia concentration and the surplus hydroxyl group concentration was determined from the titer, and the surplus hydroxyl group concentration was calculated by subtracting the ammonia concentration from the sum value.

The composition of the Li-Ni composite oxide particles according to the present invention was determined as follow. That is, the Li-Ni composite oxide particles were dissolved in an acid, and the resulting solution was analyzed by a plasma emission spectroscopic device "ICPS-7500" (manufactured by Shimadzu Corporation).

The average particle diameter was a volume-based average particle diameter as measured using a laser particle size distribution analyzer "LMS-30" manufactured by Seishin Kigyo Co., Ltd. The average particle diameter of the lithium compound was measured by a dry laser method, whereas the average particle diameter of the other particles was measured by a wet laser method.

The primary particle diameter of the aluminum compound particles was a size of primary particles constituting secondary particles thereof when observed using a scanning electron microscope "SEM-EDX" equipped with an energy disperse type X-ray analyzer (manufactured by Hitachi High-Technologies Corp.).

The specific surface area was determined by subjecting a sample to drying and deaeration at 250°C for 15 min in mixed gas comprising 30% of nitrogen and 70% of helium, and then measuring a specific surface area of the thus treated sample by a BET one-point continuous method using "MONOSORB" manufactured by Yuasa Ionics Inc.

The metal occupancy of lithium sites of the Li-Ni composite oxide particles was determined from Rietveld analysis of X-ray diffraction thereof which was conducted under the conditions of Cu-Kα, 45 kV and 200 mA using an X-ray diffractometer "SmartLab" manufactured by Rigaku Corp.

The crystallite size of the Li-Ni composite oxide particles was determined from Rietveld analysis of X-ray diffraction thereof which was conducted under the conditions of Cu-Kα, 45 kV and 200 mA using an X-ray diffractometer "SmartLab" manufactured by Rigaku Corp.

The coin cell produced by using the positive electrode active substance comprising the Li-Ni composite oxide particles was evaluated for initial charge/discharge characteristics.

First, 90% by weight of the Li-Ni composite oxide as a positive electrode active substance, 3% by weight of acetylene black and 3% by weight of a graphite "KS-5" both serving as a conducting material, and 4% by weight of polyvinylidene fluoride dissolved in N-methyl pyrrolidone as a binder, were mixed with each other, and the resulting mixture was applied onto an Al metal foil and then dried at 150°C. The thus obtained sheets were blanked into 16 mmφ and then compression-bonded to each other under a pressure of 1 t/cm², thereby producing an electrode having a thickness of 50 *µ*m and using the thus produced electrode as a positive electrode. A metallic lithium blanked into 17 mmφ was used as a negative electrode, and a solution prepared by mixing EC and DMC with each other at a volume ratio of 1:2 in which 1 mol/L of LiPF₆ was dissolved, was used as an electrolyte solution, thereby producing a coin cell of a CR2032 type.

The initial charge/discharge characteristics of the coin cell were evaluated by an initial discharge capacity and a first-cycle charge/discharge efficiency of the coin cell using the positive electrode active substance comprising the Li-Ni composite oxide particles. That is, under a room temperature condition, the coin cell was charged at rate of 0.1C until reaching 4.3 V and then discharged at a rate of 0.1C until reaching 3.0 V to measure an initial charge capacity, an initial discharge capacity and a first-cycle charge/discharge efficiency thereof.

### [Example 1]

A 6.0 mol/L ammonia aqueous solution and a 2 mol/L sodium hydroxide aqueous solution were fed to a reaction vessel filled with a mixed aqueous solution prepared by mixing 2 mol/L aqueous solutions comprising nickel sulfate, cobalt sulfate and manganese sulfate, respectively, at a mixing molar ratio of Ni:Co:Mn of 70:12:18. The contents of the reaction vessel were always kept stirred by a blade-type stirrer, and the ammonia aqueous solution and the sodium hydroxide aqueous solution were continuously fed to the reaction vessel to always keep such a condition that the ammonia concentration in the reaction vessel was 0.35 mol/L, the surplus hydroxyl group concentration in the reaction vessel was 0.01 mol/L, and the ratio of the ammonia concentration in the reaction vessel to the surplus hydroxyl group concentration in the reaction vessel was 35. The Ni-Co-Mn hydroxide thus produced in the reaction vessel was overflowed therefrom through an overflow pipe, and fed in a concentration vessel connected to the overflow pipe to concentrate the Ni-Co-Mn hydroxide therein. The concentrated Ni-Co-Mn hydroxide was circulated to the reaction vessel, and the reaction was continuously carried out for 40 hr until the concentration of the Ni-Co-Mn hydroxide in the reaction vessel and the precipitation vessel reached 4 mol/L.

After completion of the reaction, the resulting suspension of the Ni-Co-Mn hydroxide was washed with water in an amount 10 times a weight of the Ni-Co-Mn hydroxide using a filter press, and then dried, thereby obtaining Ni-Co-Mn hydroxide particles having a ratio of Ni:Co:Mn of 70:12:18.

The resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 1.00. The resulting mixture was calcined in an oxygen atmosphere at 790°C for 10 hr, and then deaggregated and pulverized, thereby obtaining Li-Ni composite oxide particles.

The thus obtained Li-Ni composite oxide particles had a chemical composition of Li_{1.00}Ni_{0.70}Co_{0.12}Mn_{0.18}O₂ (i.e., x = 1.00; y = 0.70; z = 0), an average particle diameter of 12.8 *µ*m, a BET specific surface area of 0.29 m²/g, a metal occupancy of lithium sites of 4.4% and a crystallite size of 237 nm, and the product of the metal occupancy of lithium sites and the crystallite size of the Li-Ni composite oxide particles was 1042.8. In addition, the Li-Ni composite oxide particles had an initial discharge capacity of 192.8 mAh/g and a first-cycle charge/discharge efficiency of 94.4%.

### [Examples 2 and 3]

The Ni-Co-Mn hydroxide particles were produced in the same manner as in Example 1. Subsequently, the same procedure as in Example 1 was conducted except that the resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 1.04 or 1.08, thereby obtaining Li-Ni composite oxide particles. The composition, average particle diameter and BET specific surface area of these materials are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Example 4]

The Ni-Co-Mn hydroxide particles were produced in the same manner as in Example 1. The resulting Ni-Co-Mn hydroxide particles were mixed with aluminum hydroxide particles having a primary particle diameter of 0.5 *µ*m and an average particle diameter of 1.5 *µ*m and lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn + Al) in the resulting mixture was 1.04. The resulting mixture was calcined in an oxygen atmosphere at 820°C for 10 hr, and then deaggregated and pulverized, thereby obtaining Li-Ni composite oxide particles. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Example 5]

A 6.0 mol/L ammonia aqueous solution and a 2 mol/L sodium hydroxide aqueous solution were fed to a reaction vessel filled with a mixed aqueous solution prepared by mixing 2 mol/L aqueous solutions comprising nickel sulfate, cobalt sulfate, manganese sulfate and magnesium sulfate, respectively, at a mixing molar ratio of Ni:Co:Mn:Mg of 69.65:11.94:17.91:0.5. The contents of the reaction vessel were always kept stirred by a blade-type stirrer, and the ammonia aqueous solution and the sodium hydroxide aqueous solution were continuously fed to the reaction vessel to always keep such a condition that the ammonia concentration in the reaction vessel was 0.35 mol/L, the surplus hydroxyl group concentration in the reaction vessel was 0.01 mol/L, and the ratio of the ammonia concentration in the reaction vessel to the surplus hydroxyl group concentration in the reaction vessel was 35. The Ni-Co-Mn-Mg hydroxide thus produced in the reaction vessel was overflowed therefrom through an overflow pipe, and fed in a concentration vessel connected to the overflow pipe to concentrate the Ni-Co-Mn-Mg hydroxide therein. The concentrated Ni-Co-Mn-Mg hydroxide was circulated to the reaction vessel, and the reaction was continuously carried out for 40 hr until the concentration of the Ni-Co-Mn-Mg hydroxide in the reaction vessel and the precipitation vessel reached 4 mol/L.

After completion of the reaction, the resulting suspension of the Ni-Co-Mn-Mg hydroxide was washed with water in an amount 10 times a weight of the Ni-Co-Mn-Mg hydroxide using a filter press, and then dried, thereby obtaining Ni-Co-Mn-Mg hydroxide particles having a ratio of Ni:Co:Mn:Mg of 69.65:11.94:17.91:0.5.

The resulting Ni-Co-Mn-Mg hydroxide particles were mixed with aluminum hydroxide particles having a primary particle diameter of 0.5 *µ*m and an average particle diameter of 1.5 *µ*m and lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn + Mg + Al) in the resulting mixture was 1.04. The resulting mixture was calcined in an oxygen atmosphere at 790°C for 10 hr, and then deaggregated and pulverized, thereby obtaining Li-Ni composite oxide particles. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Example 6]

A 6.0 mol/L ammonia aqueous solution and a 2 mol/L sodium hydroxide aqueous solution were fed to a reaction vessel filled with a mixed aqueous solution prepared by mixing 2 mol/L aqueous solutions comprising nickel sulfate, cobalt sulfate and manganese sulfate, respectively, at a mixing molar ratio of Ni:Co:Mn of 75:10:15. The contents of the reaction vessel were always kept stirred by a blade-type stirrer, and the ammonia aqueous solution and the sodium hydroxide aqueous solution were continuously fed to the reaction vessel to always keep such a condition that the ammonia concentration in the reaction vessel was 1.20 mol/L, the surplus hydroxyl group concentration in the reaction vessel was 0.04 mol/L, and the ratio of the ammonia concentration in the reaction vessel to the surplus hydroxyl group concentration in the reaction vessel was 30. The Ni-Co-Mn hydroxide thus produced in the reaction vessel was overflowed therefrom through an overflow pipe, and fed in a concentration vessel connected to the overflow pipe to concentrate the Ni-Co-Mn hydroxide therein. The concentrated Ni-Co-Mn hydroxide was circulated to the reaction vessel, and the reaction was continuously carried out for 40 hr until the concentration of the Ni-Co-Mn hydroxide in the reaction vessel and the precipitation vessel reached 4 mol/L.

After completion of the reaction, the resulting suspension of the Ni-Co-Mn hydroxide was washed with water in an amount 10 times a weight of the Ni-Co-Mn hydroxide using a filter press, and then dried, thereby obtaining Ni-Co-Mn hydroxide particles having a ratio of Ni:Co:Mn of 75:10:15.

The resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 1.00. The resulting mixture was calcined in an oxygen atmosphere at 820°C for 10 hr, and then deaggregated and pulverized, thereby obtaining Li-Ni composite oxide particles. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Examples 7 and 8]

The Ni-Co-Mn hydroxide particles were produced in the same manner as in Example 6. Successively, the same procedure as in Example 1 was conducted except that the resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 1.04 or 1.08, thereby obtaining Li-Ni composite oxide particles. The composition, average particle diameter and BET specific surface area of these materials are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Example 9]

The Ni-Co-Mn hydroxide particles were produced in the same manner as in Example 6. The resulting Ni-Co-Mn hydroxide particles were mixed with zirconium oxide particles having an average particle diameter of 0.4 *µ*m and lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn + Zr) in the resulting mixture was 1.04. The resulting mixture was calcined in an oxygen atmosphere at 820°C for 10 hr, and then deaggregated and pulverized, thereby obtaining Li-Ni composite oxide particles. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Example 10]

The Ni-Co-Mn hydroxide particles were produced in the same manner as in Example 6. The resulting Ni-Co-Mn hydroxide particles were mixed with aluminum hydroxide particles having a primary particle diameter of 0.5 *µ*m and an average particle diameter of 1.5 *µ*m, zirconium oxide particles having an average particle diameter of 0.4 *µ*m and lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn + Al + Zr) in the resulting mixture was 1.04. The resulting mixture was calcined in an oxygen atmosphere at 820°C for 10 hr, and then deaggregated and pulverized, thereby obtaining Li-Ni composite oxide particles. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Example 11]

A 6.0 mol/L ammonia aqueous solution and a 2 mol/L sodium hydroxide aqueous solution were fed to a reaction vessel filled with a mixed aqueous solution prepared by mixing 2 mol/L aqueous solutions comprising nickel sulfate, cobalt sulfate and manganese sulfate, respectively, at a mixing molar ratio of Ni:Co:Mn of 80:8:12. The contents of the reaction vessel were always kept stirred by a blade-type stirrer, and the ammonia aqueous solution and the sodium hydroxide aqueous solution were continuously fed to the reaction vessel to always keep such a condition that the ammonia concentration in the reaction vessel was 0.4 mol/L, the surplus hydroxyl group concentration in the reaction vessel was 0.01 mol/L, and the ratio of the ammonia concentration in the reaction vessel to the surplus hydroxyl group concentration in the reaction vessel was 40. The Ni-Co-Mn hydroxide thus produced in the reaction vessel was overflowed therefrom through an overflow pipe, and fed in a concentration vessel connected to the overflow pipe to concentrate the Ni-Co-Mn hydroxide therein. The concentrated Ni-Co-Mn hydroxide was circulated to the reaction vessel, and the reaction was continuously carried out for 40 hr until the concentration of the Ni-Co-Mn hydroxide in the reaction vessel and the precipitation vessel reached 4 mol/L.

After completion of the reaction, the resulting suspension of the Ni-Co-Mn hydroxide was washed with water in an amount 10 times a weight of the Ni-Co-Mn hydroxide using a filter press, and then dried, thereby obtaining Ni-Co-Mn hydroxide particles having a ratio of Ni:Co:Mn of 80:8:12.

The resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 1.00. The resulting mixture was calcined in an oxygen atmosphere at 790°C for 10 hr, and then deaggregated and pulverized, thereby obtaining Li-Ni composite oxide particles. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Examples 12 and 13]

The Ni-Co-Mn hydroxide particles were produced in the same manner as in Example 11. Subsequently, the same procedure as in Example 1 was conducted except that the resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 1.04 or 1.08, thereby obtaining Li-Ni composite oxide particles. The composition, average particle diameter and BET specific surface area of these materials are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Example 14]

A 6.0 mol/L ammonia aqueous solution and a 2 mol/L sodium hydroxide aqueous solution were fed to a reaction vessel filled with a mixed aqueous solution prepared by mixing 2 mol/L aqueous solutions comprising nickel sulfate, cobalt sulfate, manganese sulfate and magnesium sulfate, respectively, at a mixing molar ratio of Ni:Co:Mn:Mg of 76.8:7.7:11.5:4. The contents of the reaction vessel were always kept stirred by a blade-type stirrer, and the ammonia aqueous solution and the sodium hydroxide aqueous solution were continuously fed to the reaction vessel to always keep such a condition that the ammonia concentration in the reaction vessel was 0.40 mol/L, the surplus hydroxyl group concentration in the reaction vessel was 0.01 mol/L, and the ratio of the ammonia concentration in the reaction vessel to the surplus hydroxyl group concentration in the reaction vessel was 40. The Ni-Co-Mn-Mg hydroxide thus produced in the reaction vessel was overflowed therefrom through an overflow pipe, and fed in a concentration vessel connected to the overflow pipe to concentrate the Ni-Co-Mn-Mg hydroxide therein. The concentrated Ni-Co-Mn-Mg hydroxide was circulated to the reaction vessel, and the reaction was continuously carried out for 40 hr until the concentration of the Ni-Co-Mn-Mg hydroxide in the reaction vessel and the precipitation vessel reached 4 mol/L.

After completion of the reaction, the resulting suspension of the Ni-Co-Mn-Mg hydroxide was washed with water in an amount 10 times a weight of the Ni-Co-Mn-Mg hydroxide using a filter press, and then dried, thereby obtaining Ni-Co-Mn-Mg hydroxide particles having a ratio of Ni:Co:Mn:Mg of 76.8:7.7:11.5:4.

The resulting Ni-Co-Mn-Mg hydroxide particles were mixed with aluminum hydroxide particles having a primary particle diameter of 0.5 *µ*m and an average particle diameter of 1.5 *µ*m and lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn + Mg + Al) in the resulting mixture was 1.04. The resulting mixture was calcined in an oxygen atmosphere at 820°C for 10 hr, and then deaggregated and pulverized, thereby obtaining Li-Ni composite oxide particles. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Example 15]

The Ni-Co-Mn-Mg hydroxide particles were produced in the same manner as in Example 14 except that the composition of the Ni-Co-Mn-Mg hydroxide particles was Ni:Co:Mn:Mg of 78.4:7.84:11.76:2. The resulting Ni-Co-Mn-Mg hydroxide particles were mixed with zirconium oxide particles having an average particle diameter of 0.4 *µ*m and lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn + Mg + Zr) in the resulting mixture was 1.04. The resulting mixture was calcined in an oxygen atmosphere at 820°C for 10 hr, and then deaggregated and pulverized, thereby obtaining Li-Ni composite oxide particles. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Example 16]

The Ni-Co-Mn-Mg hydroxide particles were produced in the same manner as in Example 14 except that the composition of the Ni-Co-Mn-Mg hydroxide particles was Ni:Co:Mn:Mg of 69.65:11.94:17.91:0.5. The resulting Ni-Co-Mn-Mg hydroxide particles were mixed with aluminum hydroxide particles having a primary particle diameter of 0.5 *µ*m and an average particle diameter of 1.5 *µ*m, zirconium oxide particles having an average particle diameter of 0.4 *µ*m and lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn + Mg + Al + Zr) in the resulting mixture was 1.04. The resulting mixture was calcined in an oxygen atmosphere at 820°C for 10 hr, and then deaggregated and pulverized, thereby obtaining Li-Ni composite oxide particles. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Example 1]

The Ni-Co-Mn hydroxide particles were produced in the same manner as in Example 1. Subsequently, the same procedure as in Example 1 was conducted except that the resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 0.96, thereby obtaining Li-Ni composite oxide particles that were different in chemical composition from those of Example 1. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Example 2]

The Ni-Co-Mn hydroxide particles were produced in the same manner as in Example 1. Subsequently, the same procedure as in Example 1 was conducted except that the resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 1.12, thereby obtaining Li-Ni composite oxide particles that were different in chemical composition from those of Example 1. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Example 3]

The same procedure as in Example 1 was conducted except that a 6.0 mol/L ammonia aqueous solution and a 2 mol/L sodium hydroxide aqueous solution were fed to a reaction vessel filled with a mixed aqueous solution prepared by mixing 2 mol/L aqueous solutions comprising nickel sulfate, cobalt sulfate and manganese sulfate, respectively, at a mixing molar ratio of Ni:Co:Mn of 70:10:20, and the contents of the reaction vessel were always kept stirred by a blade-type stirrer, and the ammonia aqueous solution and the sodium hydroxide aqueous solution were continuously fed to the reaction vessel to always keep such a condition that the ammonia concentration in the reaction vessel was 0.8 mol/L, the surplus hydroxyl group concentration in the reaction vessel was 0.01 mol/L, and the ratio of the ammonia concentration in the reaction vessel to the surplus hydroxyl group concentration in the reaction vessel was 80, thereby obtaining Li-Ni composite oxide particles that were different in chemical composition from those of Example 1. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Example 4]

The Ni-Co-Mn hydroxide particles were produced in the same manner as in Comparative Example 3 except that the composition of the Ni-Co-Mn hydroxide particles was Ni:Co:Mn of 70:20:10. The resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 1.04. The resulting mixture was calcined in an oxygen atmosphere at 820°C for 10 hr, and then deaggregated and pulverized, thereby obtaining Li-Ni composite oxide particles. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Examples 5 and 6]

The Ni-Co-Mn hydroxide particles were produced in the same manner as in Example 6. Subsequently, the same procedure as in Example 6 was conducted except that the resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 0.96 or 1.12, thereby obtaining Li-Ni composite oxide particles that were different in chemical composition from those of Example 6. The composition, average particle diameter and BET specific surface area of these materials are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Example 7]

The Li-Ni composite oxide particles were produced in the same manner as in Example 7 except that the composition was controlled such that the molar ratio of Ni:Co:Mn was 75:10:15. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Example 8]

The Li-Ni composite oxide particles were produced in the same manner as in Example 7 except that the composition was controlled such that the molar ratio of Ni:Co:Mn was 75:5:20. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Examples 9 and 10]

The Ni-Co-Mn hydroxide particles were produced in the same manner as in Example 11. Subsequently, the same procedure as in Example 11 was conducted except that the resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 0.96 or 1.12, thereby obtaining Li-Ni composite oxide particles that were different in chemical composition from those of Example 11. The composition, average particle diameter and BET specific surface area of these materials are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Example 11]

The Li-Ni composite oxide particles were produced in the same manner as in Example 11 except that the composition was controlled such that the molar ratio of Ni:Co:Mn was 80:5:15. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Example 12]

A 6.0 mol/L ammonia aqueous solution and a 2 mol/L sodium hydroxide aqueous solution were fed to a reaction vessel filled with a mixed aqueous solution prepared by mixing 2 mol/L aqueous solutions comprising nickel sulfate, cobalt sulfate and manganese sulfate, respectively, at a mixing molar ratio of Ni:Co:Mn of 80:15:5. The contents of the reaction vessel were always kept stirred by a blade-type stirrer, and the ammonia aqueous solution and the sodium hydroxide aqueous solution were continuously fed to the reaction vessel to always keep such a condition that the ammonia concentration in the reaction vessel was 0.40 mol/L, the surplus hydroxyl group concentration in the reaction vessel was 0.06 mol/L, and the ratio of the ammonia concentration in the reaction vessel to the surplus hydroxyl group concentration in the reaction vessel was 6.7. The Ni-Co-Mn hydroxide thus produced in the reaction vessel was overflowed therefrom through an overflow pipe, and fed in a concentration vessel connected to the overflow pipe to concentrate the Ni-Co-Mn hydroxide therein. The concentrated Ni-Co-Mn hydroxide was circulated to the reaction vessel, and the reaction was continuously carried out for 40 hr until the concentration of the Ni-Co-Mn hydroxide in the reaction vessel and the precipitation vessel reached 4 mol/L.

After completion of the reaction, the resulting suspension of the Ni-Co-Mn hydroxide was washed with water in an amount 10 times a weight of the Ni-Co-Mn hydroxide using a filter press, and then dried, thereby obtaining Ni-Co-Mn hydroxide particles having a ratio of Ni:Co:Mn of 80:15:5.

The resulting Ni-Co-Mn hydroxide particles were mixed with lithium hydroxide monohydrate particles having a lithium carbonate content of 0.3% by weight and an average particle diameter of 10 *µ*m which were previously controlled in particle size by a crusher, such that the molar ratio of Li/(Ni + Co + Mn) in the resulting mixture was 1.04. The resulting mixture was calcined in an oxygen atmosphere at 790°C for 10 hr, and then deaggregated and pulverized, thereby obtaining Li-Ni composite oxide particles. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Example 13]

The Li-Ni composite oxide particles were produced in the same manner as in Example 11 except that the composition was controlled such that the molar ratio of Ni:Co:Mn was 60:16:24, and the calcination was conducted at 890°C. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

### [Comparative Example 14]

The Li-Ni composite oxide particles were produced in the same manner as in Example 11 except that the composition was controlled such that the molar ratio of Ni:Co:Mn was 85:6:9. The composition, average particle diameter and BET specific surface area of the material are shown in Table 1, and the metal occupancy of lithium sites, crystallite size, product of the metal occupancy of lithium sites and crystallite size, initial discharge capacity and first-cycle charge/discharge efficiency thereof are shown in Table 2.

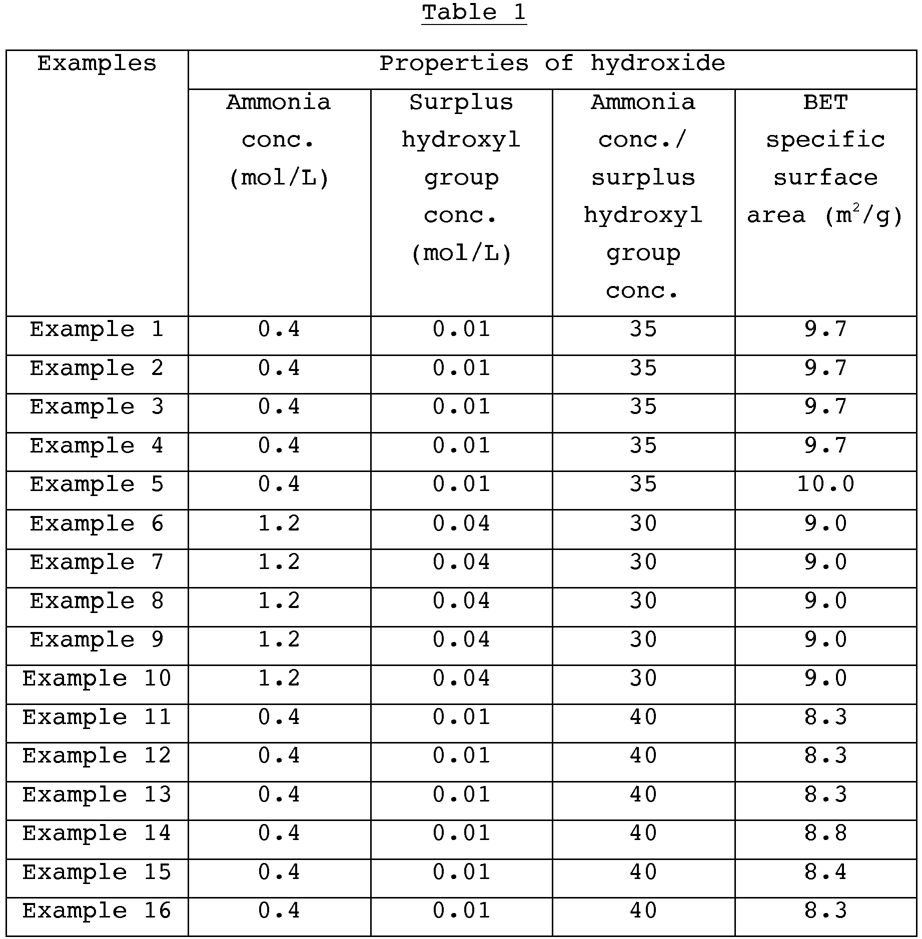

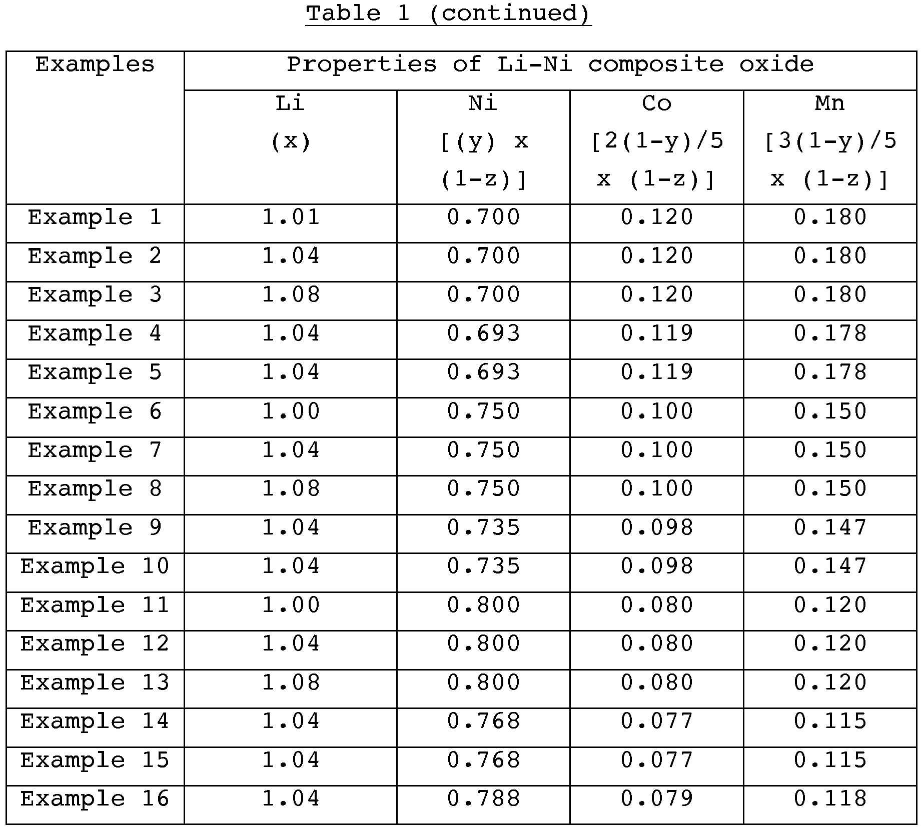

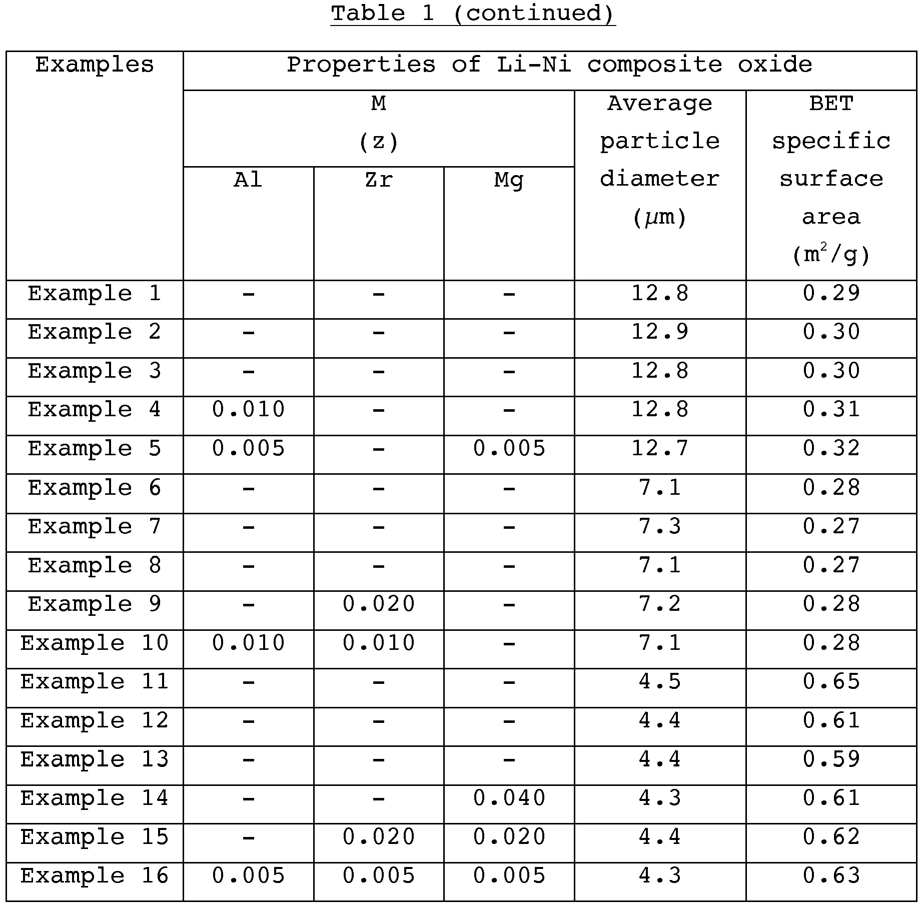

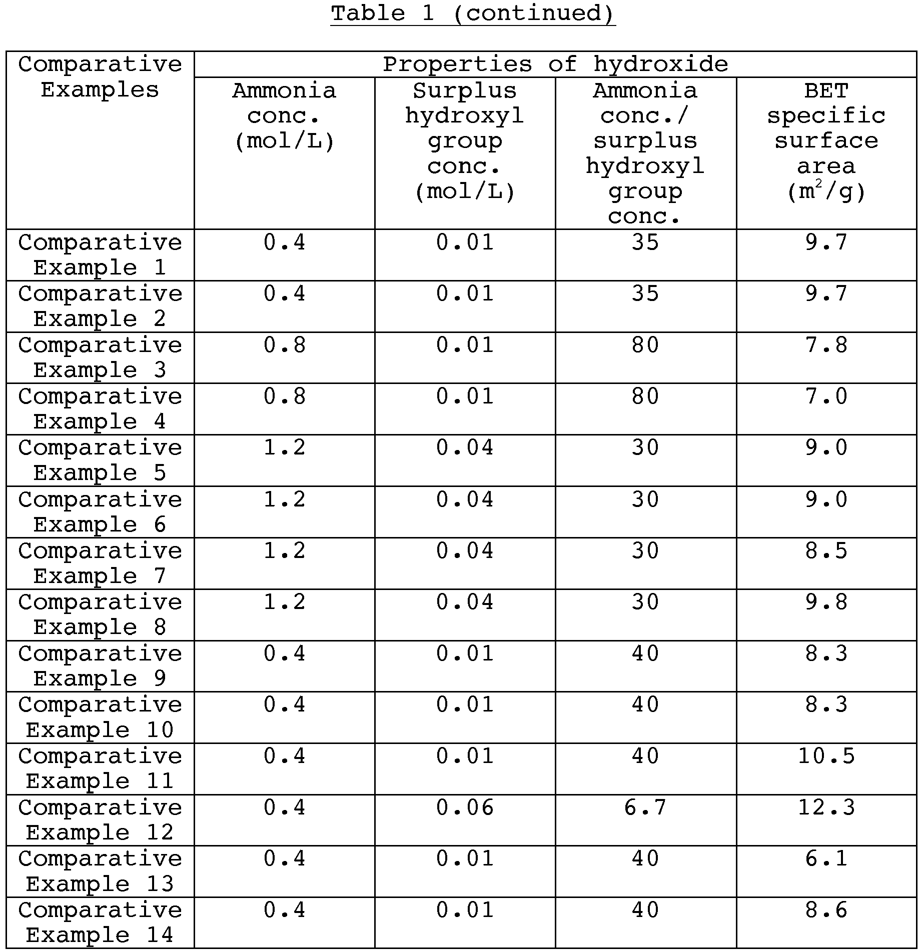

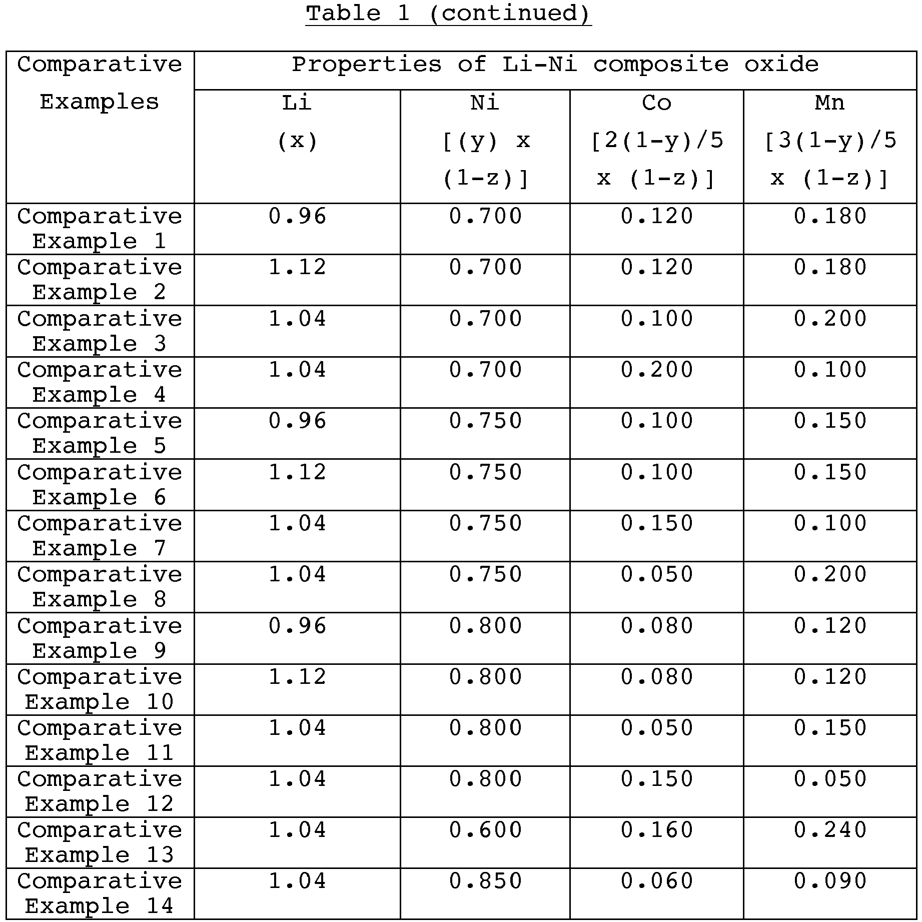

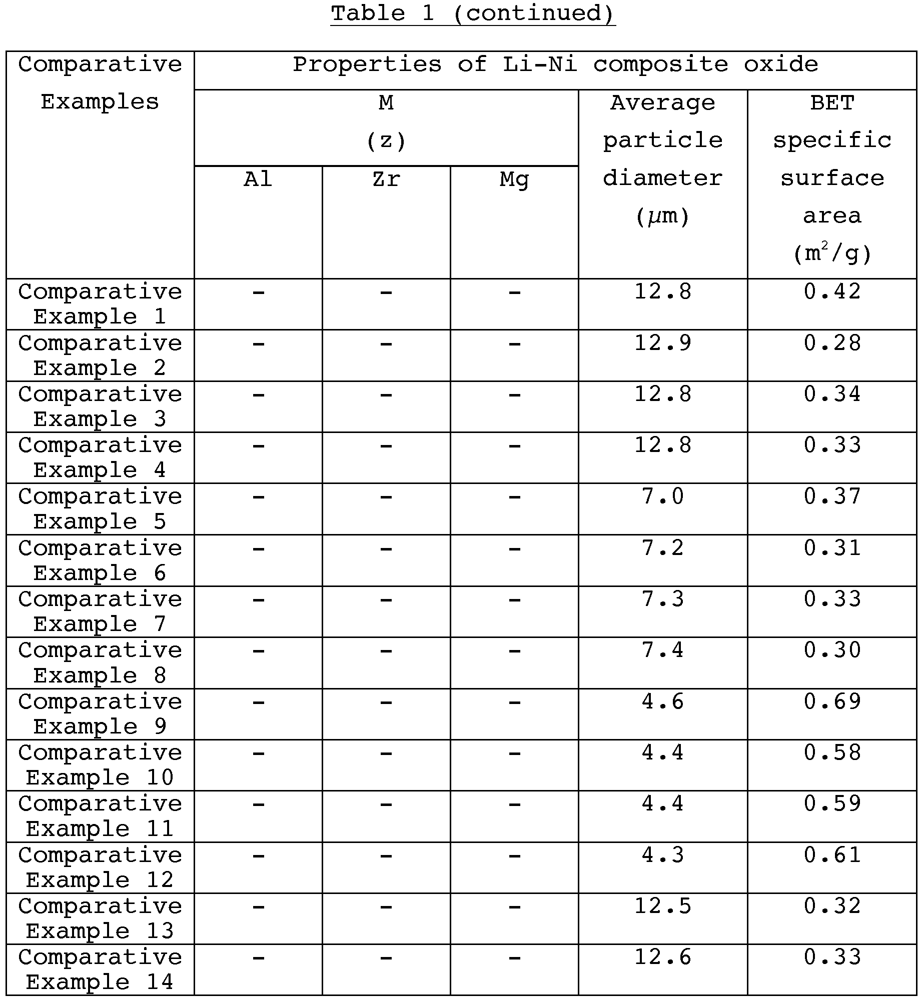

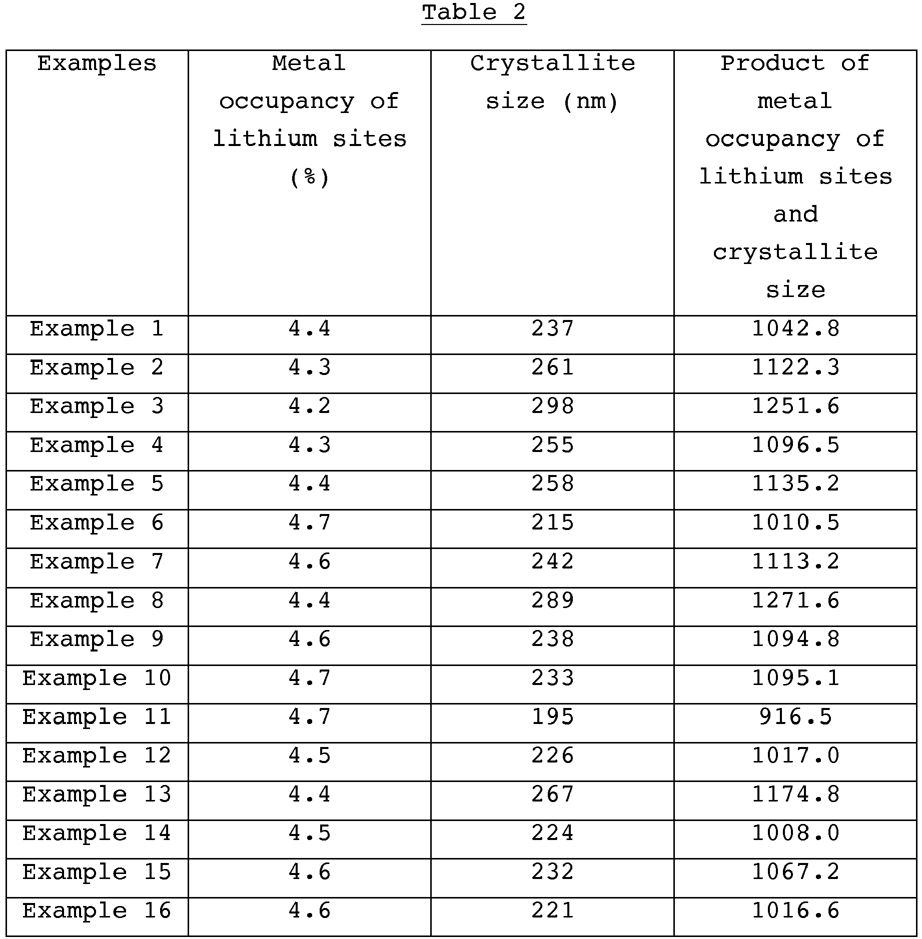

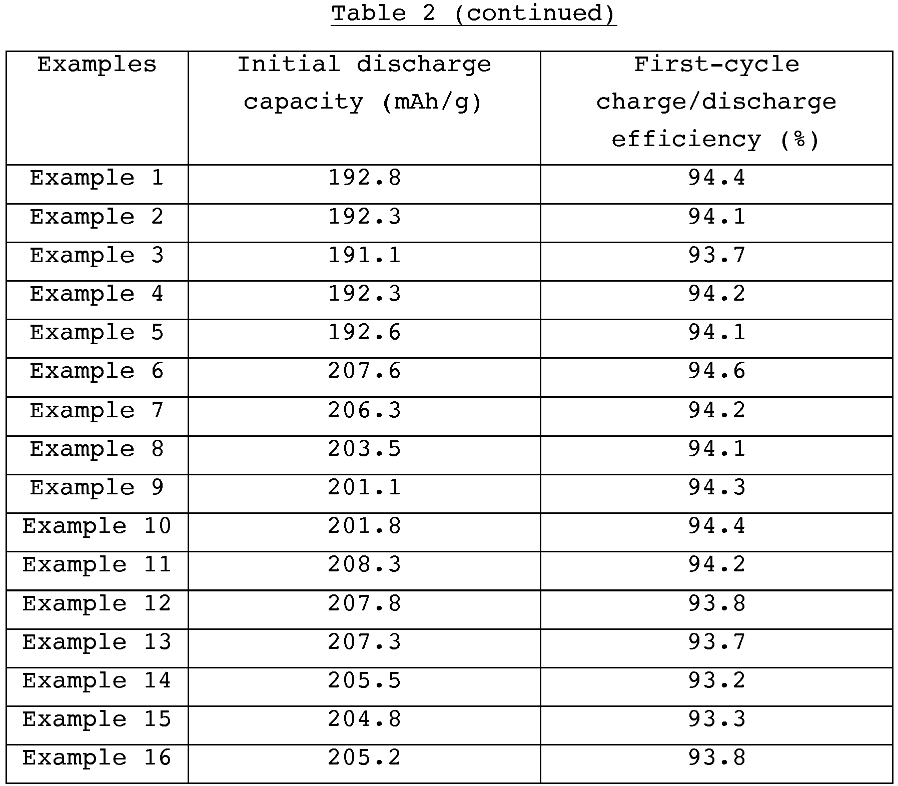

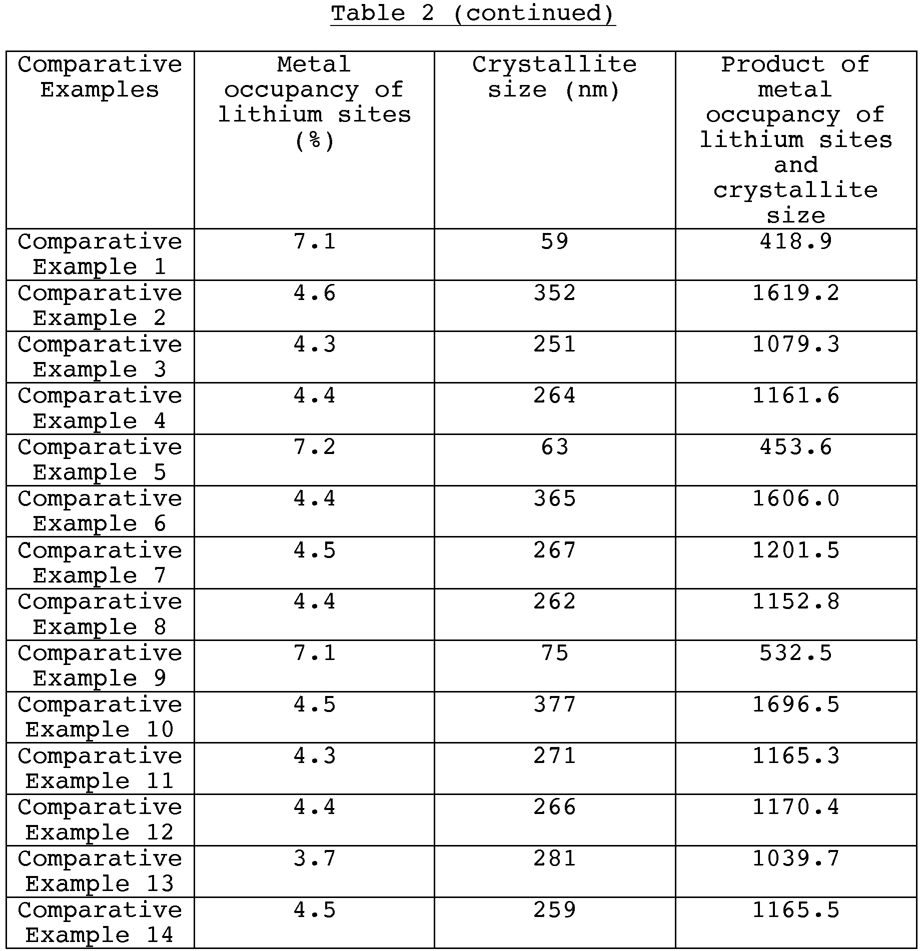

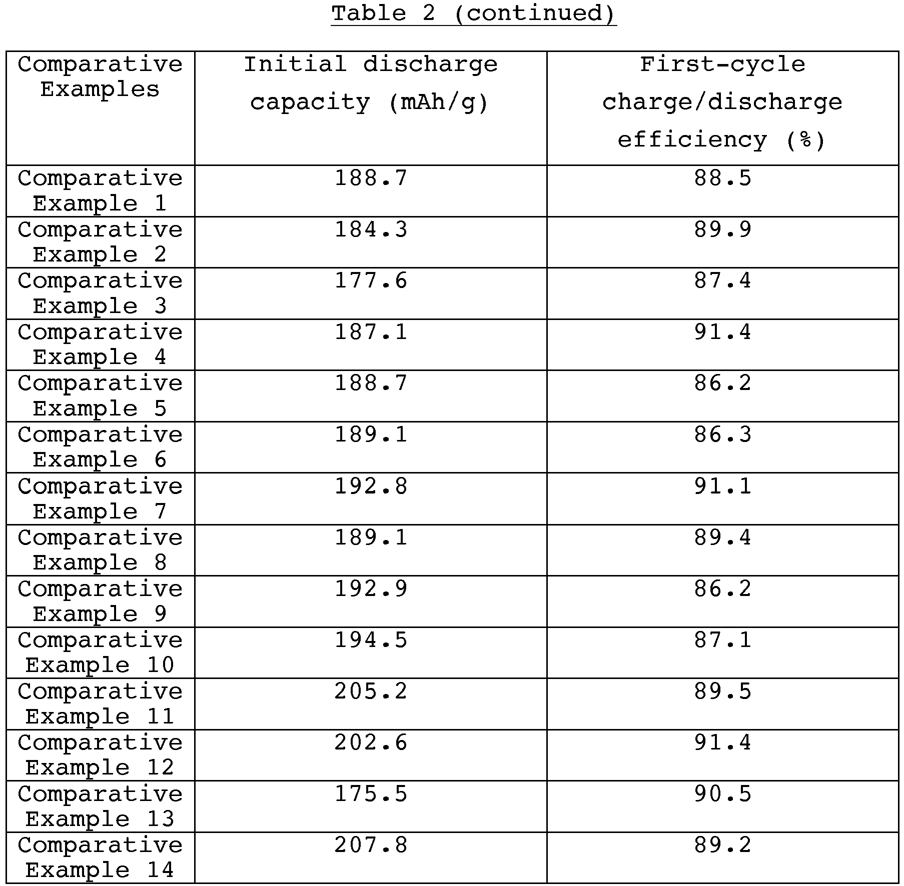

In the Li-Ni composite oxides obtained in Examples 1 to 16, the ratio of the molar concentrations of the Co and Mn components therein was 2:3, the occupancy of metals included in lithium sites thereof was not less than 2% and not more than 7%, and these Li-Ni composite oxides were therefore stabilized in their crystal structure. As a result, it was possible to ensure a diffusion path of lithium therein and attain a discharge capacity as high as not less than 190 mAh/g. These Li-Ni composite oxides were positive electrode materials that can also exhibit an excellent first-cycle charge/discharge efficiency.

In addition, since the Li-Ni composite oxides according to the present invention were well controlled in crystallite size and had a small specific surface area, it was possible to suppress the reaction with an electrolyte solution at a boundary surface of the respective particles, and provide an excellent positive electrode material that was improved in first-cycle charge/discharge efficiency.

From the above results, it was confirmed that the Li-Ni composite oxides according to the present invention were useful as an active substance for non-aqueous electrolyte secondary batteries having a high initial discharge capacity and an excellent first-cycle charge/discharge efficiency.

### INDUSTRIAL APPLICABILITY

The Li-Ni composite oxide particles according to the present invention are capable of providing a non-aqueous electrolyte secondary battery having a high initial discharge capacity and an excellent first-cycle charge/discharge efficiency when used as a positive electrode active substance for non-aqueous electrolyte secondary batteries.

## Claims

1. Li-Ni composite oxide particles having a composition of Liₓ(Ni_{y}Co_{2(1-y)/5}Mn_{3(1-y)/5})_{1-z}M_{z}O₂ wherein x, y and z represent 1.00 ≤ x ≤ 1.10; 0.65 < y < 0.82; and 0 ≤ z < 0.05, respectively; and M is at least one element selected from the group consisting of Al, Zr and Mg,
wherein a metal occupancy (%) of lithium sites of the Li-Ni composite oxide as determined by Rietveld analysis of X-ray diffraction thereof is not less than 2% and not more than 7% and a product of the metal occupancy (%) and a crystallite size (nm) of the Li-Ni composite oxide as determined by the Rietveld analysis is not less than 700 and not more than 1400.

2. The Li-Ni composite oxide particles according to claim 1, wherein the crystallite size of the Li-Ni composite oxide as determined by the Rietveld analysis is not more than 500 nm.

3. The Li-Ni composite oxide particles according to either claim 1 or claim 2, wherein the Li-Ni composite oxide particles have an average particle diameter of 1 to 20 µm.

4. The Li-Ni composite oxide particles according to any one of claims 1 to 3, wherein the Li-Ni composite oxide particles have a BET specific surface area of 0.1 to 1.6 m²/g.

5. A process for producing the Li-Ni composite oxide particles according to any one of claims 1 to 4, which process comprises mixing lithium compound particles and Ni-Co-Mn hydroxide particles, together with aluminum compound particles and/or zirconium compound particles if required, and calcining the resulting mixture.

6. A process according to claim 5, wherein the lithium compound is lithium hydroxide.

7. A process according to either claim 5 or claim 6, wherein the lithium compound has a lithium carbonate content of less than 5%.

8. A process according to any one of claims 5 to 7, wherein the lithium compound particles have an average particle diameter of not more than 50 µm.

9. A process according to any one of claims 5 to 8, wherein the Ni-Co-Mn hydroxide particles have an average particle diameter of 2 to 30 µm and BET specific surface area of 1 to 20 m²/g.

10. A process according to any one of claims 5 to 9, wherein the calcination takes place at a temperature of 650 to 950°C in an oxidative gas atmosphere.

11. A non-aqueous electrolyte secondary battery using a positive electrode comprising a positive electrode active substance comprising the Li-Ni composite oxide particles as claimed in any one of claims 1 to 4.

12. Use of the Li-Ni composite oxide particles according to any one of claims 1 to 4 as a positive electrode active substance for a non-aqueous electrolyte battery.

## Patentansprüche

1. Li-Ni-Zusammensetzungsoxidpartikel mit einer Zusammensetzung von Liₓ (Ni_{y}CO_{2(1-y)}/₅Mn_{3(1-y)/5})_{1-z}M_{z}O₂, wobei x, y und z jeweils 1,00 ≤ x ≤ 1,10; 0,65 < y < 0,82; und 0 ≤ z < 0,05 darstellen; und M mindestens ein Element ist, das aus der Gruppe bestehend aus Al, Zr und Mg ausgewählt ist,
wobei eine Metallbesetzung (%) von Lithiumstellen des Li-Ni-Zusammensetzungsoxids wie durch Rietveld-Analyse bestimmt von Röntgenbeugung davon nicht weniger als 2 % und nicht mehr als 7 % ist und ein Produkt der Metallbesetzung (%) und eine Kristallitgröße (nm) des Li-Ni-Zusammensetzungsoxids wie durch die Rietveld-Analyse bestimmt nicht weniger als 700 und nicht mehr als 1400 ist.

2. Li-Ni-Zusammensetzungsoxidpartikel nach Anspruch 1, wobei die Kristallitgröße des Li-Ni-Zusammensetzungsoxids wie durch die Rietveld-Analyse bestimmt nicht mehr als 500 nm ist.

3. Li-Ni-Zusammensetzungsoxidpartikel nach entweder Anspruch 1 oder Anspruch 2, wobei die Li-Ni-Zusammensetzungsoxidpartikel einen durchschnittlichen Partikeldurchmesser von 1 bis 20 µm haben.

4. Li-Ni-Zusammensetzungsoxidpartikel nach einem der Ansprüche 1 bis 3, wobei die Li-Ni-Zusammensetzungsoxidpartikel einen BET-spezifischen Oberflächenbereich von 0,1 bis 1,6 m²/g haben.

5. Verfahren zum Herstellen der Li-Ni-Zusammensetzungsoxidpartikel nach einem der Ansprüche 1 bis 4, welches Verfahren ein Mischen von Lithiumverbindungspartikeln und Ni-Co-Mn-Hydroxidpartikeln zusammen mit Aluminiumverbindungspartikeln und/oder Zirkoniumverbindungspartikeln falls erforderlich und ein Kalzinieren des resultierenden Gemischs umfasst.

6. Verfahren nach Anspruch 5, wobei die Lithiumverbindung Lithiumhydroxid ist.

7. Verfahren nach entweder Anspruch 5 oder Anspruch 6, wobei die Lithiumverbindung einen Lithiumcarbonatgehalt von weniger als 5 % hat.

8. Verfahren nach einem der Ansprüche 5 bis 7, wobei die Lithiumverbindungspartikel einen durchschnittlichen Partikeldurchmesser von nicht mehr als 50 µm haben.

9. Verfahren nach einem der Ansprüche 5 bis 8, wobei die Ni-Co-Mn-Hydroxidpartikel einen durchschnittlichen Partikeldurchmesser von 2 bis 30 µm und einen BET-spezifischen Oberflächenbereich von 1 bis 20 m²/g haben.

10. Verfahren nach einem der Ansprüche 5 bis 9, wobei die Kalzinierung bei einer Temperatur von 650 bis 950 °C in einer oxidativen Gasatmosphäre stattfindet.

11. Nichtwässrige Elektrolytsekundärbatterie, die eine positive Elektrode verwendet, umfassend einen positiven Elektrodenwirkstoff, umfassend die Li-Ni-Zusammensetzungsoxidpartikel nach einem der Ansprüche 1 bis 4.

12. Verwendung der Li-Ni-Zusammensetzungsoxidpartikel nach einem der Ansprüche 1 bis 4 als ein positiver Elektrodenwirkstoff für eine nichtwässrige Elektrolytbatterie.

## Revendications

1. Particules d'oxyde composite Li-Ni présentant une composition de Liₓ (Ni_{y}CO_{2(1-y)}/₅Mn_{3(1-y)/5})_{1-z}M_{z}O₂, où x, y et z représentent 1,00 ≤ x ≤ 1,10 ; 0,65 < y < 0,82 ; et 0 ≤ z < 0,05, respectivement ; et M est au moins un élément choisi dans le groupe constitué par Al, Zr et Mg,
un taux d'occupation métallique (en %) de sites de lithium de l'oxyde composite Li-Ni comme déterminé par l'analyse Rietveld d'une diffraction de celui-ci par rayons X n'étant pas moins de 2 % et pas plus de 7 % et un produit du taux d'occupation métallique (en %) et d'une taille de cristallite (nm) de l'oxyde composite Li-Ni comme déterminé par l'analyse Rietveld n'étant pas moins de 700 et pas plus de 1400.

2. Particules d'oxyde composite Li-Ni selon la revendication 1, dans lesquelles la taille de cristallite de l'oxyde de composite Li-Ni comme déterminée par l'analyse Rietveld n'est pas plus de 500 nm.

3. Particules d'oxyde composite Li-Ni selon la revendication 1 ou la revendication 2, les particules d'oxyde composite Li-Ni présentant un diamètre moyen de particule allant de 1 à 20 µm.

4. Particules d'oxyde composite Li-Ni selon l'une quelconque des revendications 1 à 3, les particules d'oxyde composite Li-Ni présentant une superficie spécifique BET allant de 0,1 à 1,6 m²/g.

5. Processus de production des particules d'oxyde composite Li-Ni selon l'une quelconque des revendications 1 à 4, lequel processus comprend le mélange de particules de composé de lithium et de particules d'hydroxyde de Ni-Co-Mn, ensemble avec des particules de composé d'aluminium et/ou des particules de composé de zirconium si nécessaire et la calcination du mélange obtenu.

6. Processus selon la revendication 5, dans lequel le composé de lithium est l'hydroxyde de lithium.

7. Processus selon la revendication 5 ou la revendication 6, dans lequel le composé de lithium présente une teneur en carbonate de lithium de moins de 5 %.

8. Processus selon l'une quelconque des revendications 5 à 7, dans lequel les particules de composé de lithium présentent un diamètre moyen de particule de pas plus de 50 µm.

9. Processus selon l'une quelconque des revendications 5 à 8, dans lequel les particules d'hydroxyde de Ni-Co-Mn présentent un diamètre moyen de particule de 2 à 30 µm et une superficie spécifique BET de 1 à 20 m²/g.

10. Processus selon l'une quelconque des revendications 5 à 9, dans lequel la calcination a lieu à une température de 650 à 950 °C dans une atmosphère de gaz oxydant.

11. Batterie secondaire à électrolyte non aqueux à base d'une électrode positive comprenant une substance active d'électrode positive comprenant les particules d'oxyde composite Li-Ni telles que définies dans l'une quelconque des revendications 1 à 4.

12. Utilisation des particules d'oxyde composite Li-Ni selon l'une quelconque des revendications 1 à 4 en tant que substance active d'électrode positive pour une batterie à électrolyte non aqueux.
